# EUROPÄISCHE PATENTSCHRIFT

(11) **EP 1 882 573 B1**
(45) Veröffentlichungstag und Bekanntmachung des Hinweises auf die Patenterteilung: **08.09.2010**
(21) Anmeldenummer: 06015661.9
(22) Anmeldetag: 27.07.2006
(51) Int. Cl.: B29C 35/02, B29C 70/44

(54) **Vulkanisationsverfahren für grossflächige, mehrlagige Bauteile**
Vulcanizing method for multilayer components having a large surface
Procédé pour la vulcanisation d'éléments multicouches à grande surface

(43) Veröffentlichungstag der Anmeldung: 30.01.2008
(73) Patentinhaber: GEKE Equitec GmbH, 78713 Schramberg (DE)
(72) Erfinder: Kellner, Gerd, 78713 Schramberg (DE)
(74) Vertreter: Söltenfuss, Dirk Christian

(56) Entgegenhaltungen:
- WO-A-96/22878
- DE-A1- 2 917 344
- DE-A1- 3 418 110
- DE-A1- 3 739 753
- GB-A- 1 005 498
- US-A- 6 017 484
- US-A1- 2004 115 299

## Beschreibung

Die Erfindung betrifft ein Verfahren zur Herstellung von großflächigen Bauteilen oder Schichtaufbauten beliebiger Formgebung aus wenigstens zwei mit einer Vulkanisationsschicht verbundenen starren Formteilen aus grundsätzlich beliebigem Material.

Nach dem Stand der Technik sind zur Herstellung von Formteilen aus mehreren Lagen bzw. Schichten bereits verschiedene Verfahren bekannt. Bei diesen herkömmlichen Verfahren wird ein Aufbau aus wenigstens zwei starren Platten mit dazwischen angeordnetem Kautschukmaterial in eine Presse gelegt und der Kautschuk dann unter Druck und Temperatur in der Presse ausvulkanisiert. Dieses Verfahren zeigt in der Praxis aber einige Nachteile. So ist es problematisch, während des Vulkanisationsprozesses alle Gasblasen aus dem Schichtaufbau zu entfernen, um eine homogene und zuverlässige Verbindung zwischen den Platten herzustellen. Durch eine ungleichmäßige Temperaturverteilung über die geheizten Platten der Presse wird dies noch erschwert. Insbesondere werden zur Herstellung von gekrümmten und/oder auf der Oberfläche uneben gestalteten Bauteilen aufwändige und teure Formen benötigt. Weiterhin muss eine Presse für ein neues Bauteil entsprechend umgerüstet werden, wobei das Aufbringen eines seitlichen Drucks für bestimmte Strukturen der Formteile grundsätzlich nur begrenzt möglich ist. Außerdem sind die Abmessungen der in einer Presse zu fertigenden Formteile durch die Größe verfügbarer Pressen begrenzt.

Des Weiteren ist ein so genanntes DP-RTM (Difference Pressure-Resin Transfer Moulding) - Verfahren zur Herstellung von Faserverbundstrukturen bekannt. Dabei werden zum Beispiel Formteile aus Faserverbundwerkstoffen hergestellt, indem ein vorgeformtes trockenes Fasermaterial in eine Form eingebracht und in dieses ein reaktives Harz bzw. Harzgemisch injiziert wird. Um Gaseinschlüsse in dem Fasermaterial zu vermeiden, wird die Form vor der Harzinjektion evakuiert. Beispiele dieses DP-RTM-Verfahrens sind in der DE 195 36 675 C1 und der DE 198 53 709 C1 offenbart. Für das DP-RTM-Verfahren ist einerseits eine spezielle Harz-Injektionsvorrichtung erforderlich, andererseits eignet sich dieses Verfahren nur für Fasermaterialien, die mit einem Harz getränkt werden können. So können zum Beispiel zwei Metallplatten nicht mit dem DP-RTM-Verfahren miteinander verbunden werden.

Ferner sind Vulkanisationsverfahren zum Runderneuern von Reifen bekannt, bei denen eine neue Lauffläche aus einer Gummimischung auf eine Karkasse aufvulkanisiert wird, indem die Anordnung mit einer Umhüllung umschlossen wird, welche evakuiert wird, bevor der eigentliche Vulkanisationsprozess mittels geringer Wärmezufuhr (Kaltvulkanisation) durchgeführt wird. Während des Vulkanisationsprozesses erweicht die Vulkanisationsschicht aus Gummi zwischen Karkasse und Lauffläche und fließt. Siehe beispielsweise DE 36 18 251 A1 und EP 0 399 942 B1.

Die Patenschrift GB 1,005,498 beschreibt ein Verfahren zur Beschichtung einer Rolle mit Gummi, bei dem eine flexible, luftdichte Umhüllung, die evakuiert wird, verwendet wird.

Es ist eine Aufgabe der vorliegenden Erfindung, ein Verfahren zur Herstellung von großflächigen Bauteilen oder Schichtaufbauten vorzusehen, mit dem bei minimalem Aufwand und unter Vermeidung komplizierter und kostenintensiver Vorrichtungen oder Aufbauten zwei- oder mehrlagige starre Formteile beliebiger Materialien und beliebiger Form vulkanisiert werden können.

Diese Aufgabe wird durch die in Patentanspruch 1 angegebene Verfahrenstechnik gelöst. Vorteilhafte Weiterbildungen des erfindungsgemäßen Verfahrens sind Gegenstand der abhängigen Ansprüche.

Bei dem Verfahren gemäß der Erfindung wird zunächst eine Anordnung aus wenigstens zwei (zum Beispiel plattenförmigen) starren Formteilen mit einer oder mehreren Vulkanisationsschichten bzw. -folien aus einem Kautschukmaterial gebildet. Die Formteile sind jeweils an den Kontaktflächen zum Kautschuk mit geeigneten, handelsüblichen Primern und Haftvermittlungssystemen beschichtet. Anschließend wird die Anordnung mit einer flexiblen Umhüllung aus einem ausreichend fluiddichten Material umschlossen, und der Innenraum der Umhüllung (Folie) wird zur Ausbildung eines Unterdrucks bzw. Vakuums evakuiert. Hierdurch wird die Anordnung zusammengezogen und/oder zusammengepresst und stabilisiert sich dadurch in der Regel selbst. Zum Vulkanisieren des Kautschukmaterials an der Oberfläche eines Aufbaus oder zwischen den einzelnen Formteilen wird die Anordnung in einem beheizbaren Druckbehälter mit Druck und hoher Temperatur beaufschlagt, wobei der Innenraum der flexiblen Umhüllung weiterhin evakuiert werden kann. Durch das Evakuieren werden sowohl Gaseinschlüsse zwischen den Lagen des Bauteils als auch die während des Vulkanisationsprozesses entstehende Gasblasen oder Dämpfe abgesaugt, sodass eine gleichmäßige und zuverlässige Vulkanisationsverbindung sichergestellt ist. Die Temperatur liegt im Gegensatz zur Kaltvulkanisation bei der eingangs erwähnten Runderneuerung von Reifen im Bereich zwischen 140°C und 200°C.

Das Verfahren ist nicht auf bestimmte Größen oder Formen der herzustellenden Bauteile beschränkt. Insbesondere können auch gekrümmte, unebene oder geometrisch frei gestaltete Bauteile vulkanisiert werden, ohne dass spezielle Formen bereitgestellt werden müssen, da die Bauteile in dem beheizbaren Druckbehälter (Autoklav) von allen Seiten gleichmäßig mit Druck beaufschlagt werden können. Derartige Autoklaven stehen in wesentlich größeren Dimensionen zur Verfügung als Pressen, die bei dem eingangs beschriebenen herkömmlichen Verfahren eingesetzt werden. Außerdem können in einem Autoklav grundsätzlich mehrere, auch unterschiedliche Bauteile gleichzeitig vulkanisiert werden, was zu einer hohen Effektivität des Fertigungsprozesses führt. Vorzugsweise werden die vorbereitenden Verfahrensschritte (vor dem eigentlichen Vulkanisationsschritt) außerhalb des Autoklaven durchgeführt, sodass dieser nur für eine relativ kurze Zeit belegt werden muss.

Bei Vulkanisationsvorgängen unterscheidet man allgemein zwischen sensiblen und weniger sensiblen Parametern. Sensible Parameter sind die Gummiart, die verwendeten Komponenten, die Entgasung und der eingesetzte Weichmacher. Weichmacher, insbesondere in der Haftungsschicht, stellen bezüglich der Haftungsqualität äußerst kritische Bestandteile dar. Es sei bereits an dieser Stelle darauf hingewiesen, dass das in der Erfindung beschriebene Verfahren von Weichmachern unabhängig ist.

Weniger sensible Parameter stellen der Vulkanisationsdruck und die Vulkanisationstemperatur dar. Der Vulkanisationsdruck ist entscheidend für den Kontakt zwischen der Elastomerkomponente und dem Haftmittel und damit den Bauteilkomponenten. Daher ist ein ausreichender Druck während des Vulkanisationsvorgangs nötig. Die erforderliche Temperatur wird durch die eingesetzten Materialien bestimmt. Die Höhe und die Dauer der Erwärmung sind voneinander abhängige Größen.

Parameter mit geringerem Einfluss stellen der Druckaufbau und die Vulkanisationszeit dar. Letztere wird durch die Formengestaltung, den Wärmeübergang bzw. Wärmedurchgang der Bauteile beeinflusst. Die im Zusammenhang mit der Erfindung dargelegten technischen Möglichkeiten und Lösungsansätze veranschaulichen einen ganz besonderen Vorzug des hier vorgeschlagenen Verfahrens auch im Bereich dieser Einflussgrößen.

Ein weiterer, für die Qualität eines vulkanisierten Bauteils wichtiger Gesichtspunkt ist die Abstimmung zwischen Haftmittelfilm und Gummimischung bzw. eingebrachtem Gummirohling oder sonstigen Elementen. Hier ist das so genannte Beladen der Form von Bedeutung, das mit dem hier vorgeschlagenen Verfahren nahezu beliebig einzustellen ist. Aus den oben dargelegten Gesichtspunkten ergibt sich für das Verfahren entsprechend der Erfindung ein besonders großer Spielraum möglicher Anwendungsvarianten. Dies wird aus der Vielzahl der aufgeführten Ausführungsbeispiele, die meist wieder für ganze Anwendungsgruppen stehen, ersichtlich.

Die Temperatur zum Vulkanisieren des Kautschukmaterials wird zwischen 140°C bis 200°C, vorzugsweise auf 150-160°C eingestellt. Der zum Vulkanisieren benötigte Druck wird im Bereich von etwa 0,2 MPa (= 2 bar) bis etwa 3,0 MPa (= 30 bar) gewählt. Damit bestehen bezüglich der Größe der zu vulkanisierenden Bauteile keine Einschränkungen, da 0,6 MPa (= 6 bar) dem zulässigen Innendruck von Großautoklaven entspricht.

Die günstigsten Voraussetzungen für den Vulkanisierungsprozess hängen insbesondere von der Zusammensetzung des gewählten Kautschukmaterials für die Vulkanisationsschicht ab. Die Schichtdicken dieser Zwischenlagen hängen ausschließlich vom Verwendungszweck des zu vulkanisierenden Bauteils ab. Diesbezügliche Einschränkungen sind für das Verfahren gemäß der Erfindung nicht bekannt. Üblicherweise werden die benötigten Vulkanisationsschichten aus der gewählten Kautschukmischung mit Hilfe von Kalandern hergestellt. Es kann daher von problemlos zu fertigenden Schichtdicken ab 0,5 mm bis etwa 5 mm ausgegangen werden. Die Vulkanisationsschichten können bei dem erfindungsgemäßen Verfahren beliebig mehrfach übereinander angeordnet werden, sodass sich eine nahezu beliebig dicke Vulkanisationsschicht einstellen lässt. Um eine gleichmäßigere Vulkanisierung des Kautschukmaterials zu erreichen, kann es von Vorteil sein, im Autoklaven zuerst den gewünschten Druck und danach die gewünschte Temperatur aufzubauen.

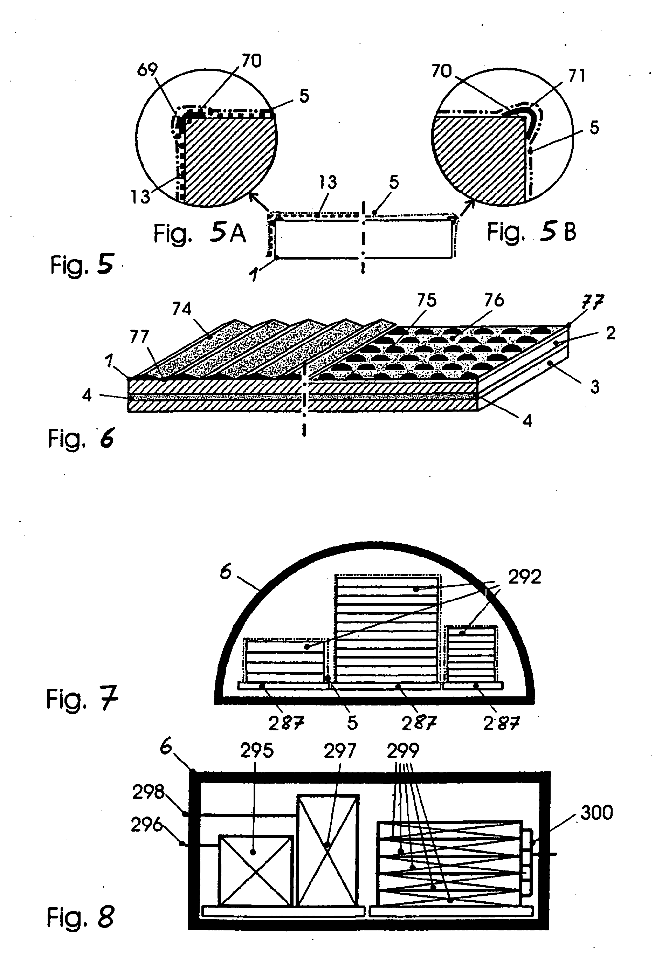

Das Verfahren zur Herstellung eines Bauteils oder Schichtaufbaus aus zwei oder mehr miteinander durch Vulkanisieren zu verbindenden Einzelschichten (starre Formteile) ist auf vergleichbare Weise für die Herstellung von Oberflächen aus vulkanisierten Folien oder Schichten allgemein geeignet (vgl. z.B. Fig. 6). Obwohl in den Figuren überwiegend ein Bauteil oder Schichtaufbau dargestellt ist, der aus zwei Platten (starren Formteilen) und einer Zwischenlage (Vulkanisationsschicht) aus Elastomer besteht, ist das Verfahren gemäß der Erfindung aber keinesfalls hierauf beschränkt. Vielmehr können Bauteile mit einer beliebigen Anzahl von Schichten mit zwischen den einzelnen Formteilen angeordneten Vulkanisationsschichten gefertigt werden. Außerdem ist das Verfahren gemäß der Erfindung weder bezüglich Größe noch bezüglich Form oder der Oberflächenstruktur des Bauteils oder Schichtaufbaus Einschränkungen unterworfen.

Mit dem erfindungsgemäßen Vulkanisationsverfahren werden Sicherheitszellen oder Sicherheitsstrukturen in besonders einfacher Weise herstellbar bzw. technisch erst realisierbar. In diesem Zusammenhang sind Verbindungen von besonderem Interesse, die z.B. nicht schweißbar oder lötbar sind oder Verbindungen von zum Teil sehr dünnen Komponenten bis hin zu Bauteilen mit extrem geringer Wandstärke. Ein weiterer technisch interessanter Aspekt besteht in der Erzeugung von besonders verwindungssteifen, formstabilen und gleichzeitig sehr leichten Strukturen, die über dieses Verfahren realisierbar werden können. Derartige Strukturen können auch geeignet sein, grundsätzlich oder in besonderen Einsatzfällen Gase oder Flüssigkeiten aufzunehmen bzw. weiterzuleiten. Weiterhin können mit diesem Vulkanisationsverfahren beliebig geformte, beliebig große Baugruppen zusammenvulkanisiert werden bzw. mit einer Vulkanisationsschicht überzogen werden. Anwendungsbeispiele hierfür sind begehbare Platten, stoßgedämpfte Schichten, feuchtigkeitsgeschützte Bauteile, Radkästen oder Dachflächen von Fahrzeugen, Unterbodengruppen, mehrschichtige Konstruktionen insbesondere im Dünn- und Dünnstblechbereich, der Witterung ausgesetzte Teile, Module mit partiell oder großflächig geforderten Dämpfungseigenschaften, vibrationsdämpfende Elemente und Isolierkomponenten.

Obige und weitere Merkmale und Vorteile der Erfindung werden aus der folgenden detaillierten Beschreibung verschiedener bevorzugter Ausführungsbeispiele unter Bezugnahme auf die beiliegenden Zeichnungen offensichtlich. Darin zeigen:
- Fig. 1: eine Vorrichtung mit einer folienumkleideten Anordnung, die auf einem Unterbau montiert und mittels einer beweglichen Vorrichtung in einen Autoklav eingebracht ist, zur erfindungsgemäßen Herstellung eines Bauteils;
- Fig. 2: eine schematische Darstellung eines Ausführungsbeispiels einer Anordnung eines zu fertigenden Bauteils mit zwei plattenförmigen Formteilen und einer dazwischen liegenden Vulkanisationsschicht mit einer die Anordnung umgebenden Umhüllung;
- Fig. 2A: eine Teilvergrößerung von Fig. 2: Bauteilkomponenten, Vulkanisationsschicht und Haftvermittler mit umgebender Umhüllung;
- Fig. 2B: eine Teilvergrößerung entsprechend Fig. 2: Abdeckbeispiel (Leiste) für dickere Vulkanisationsschichten (wahlweise mit umgebender Umhüllung);
- Fig.3: eine schematische Anordnung eines Ausführungsbeispiels einer Anordnung entsprechend Fig. 2 mit vollständiger Folien- und Vliesumkleidung sowie Absaugeinrichtung und Dichtleiste mit Absaugung;
- Fig. 3A: eine Teilvergrößerung von Fig. 3: Abdeckbeispiel mit Absaugvlies und Umhüllung;
- Fig. 3B: eine Teilvergrößerung entsprechend Fig. 3: Abdeckbeispiel mit Umhüllung mit einem weiteren Abdeckbeispiel (Hohlleiste) im Bereich der Vulkanisationsschicht;
- Fig. 3C: eine Teilvergrößerung von Fig. 3B: selbstdichtende Abdeckleiste für die Vulkanisationsschicht (Dichtlippe);
- Fig.4: eine schematisierte Darstellung zur Druckverteilung bei einem Umschließen der zu evakuierenden Anordnung in einem Autoklav;
- Fig. 4A: eine Detaildarstellung von Fig. 4;
- Fig. 5: schematische Darstellung von zwei Beispielen für einen Folien- bzw. Kantenschutz, wobei die linke Seite eine Eckleiste mit Vlies und Unterdruck-Folie und die rechte Seite eine hohle Eckleiste ohne Vliesunterlegung der Unterdruck-Folie zeigt;
- Fig. 5A: eine Teilvergrößerung der linken Seite von Fig. 5;
- Fig. 5B: eine Teilvergrößerung der rechten Seite von Fig. 5;
- Fig. 6: eine schematische Darstellung von zwei Ausführungsbeispielen einer Anordnung für ein Bauteil aus zwei Platten mit einer oberen (abdeckenden) Vulkanisationsschicht mit Oberflächenstruktur, wobei die linke Seite eine linienartige Struktur und die rechte Seite eine Noppenstruktur zeigt;
- Fig. 7: eine schematische Darstellung eines Beispiels der Beschickung eines Autoklaven mit unterschiedlichem zu vulkanisierendem Gut; und
- Fig. 8: eine schematische Darstellung von Beispielen für die gemeinsame oder getrennte Absaugung der zur Vulkanisation in den Autoklav verbrachten Bauteile oder Baugruppen.

### DETAILLIERTE BESCHREIBUNG VON BEVORZUGTEN AUSFÜHRUNGSBEISPIELEN

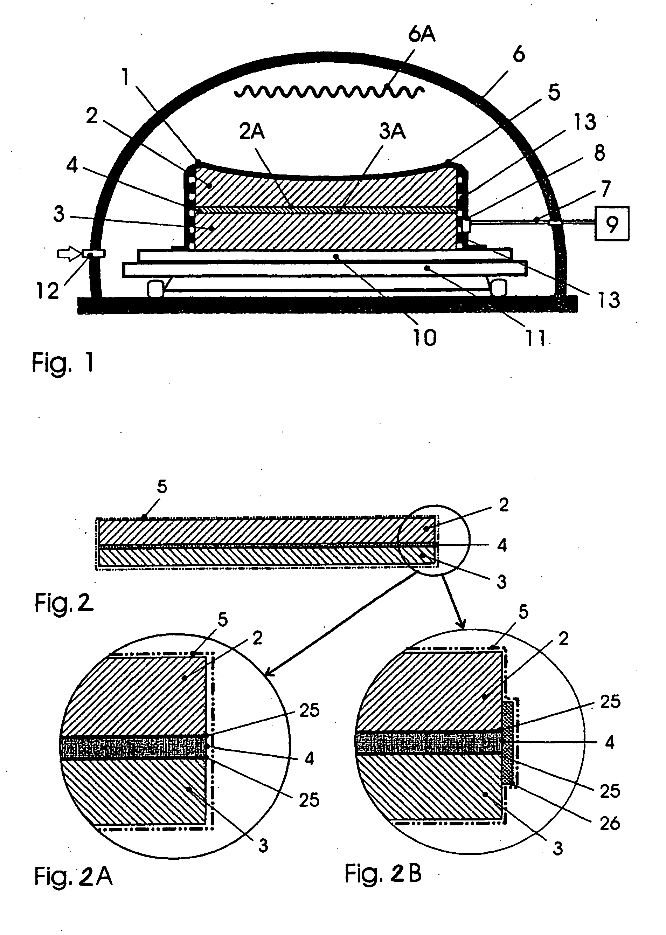

Fig. 1 zeigt schematisch ein System gemäß der Erfindung mit einer mittels einer Folie (einer Haut oder einer sonstigen, gasdichten oder weitgehend gasdichten oder gegen Flüssigkeiten dichten Umhüllung) 5 umkleideten Anordnung 1, hier eine doppelschichtige Anordnung mit einer zwischen der oberen Komponente 2 und der unteren Komponente 3 liegenden Vulkanisationsschicht 4, die auf einem Träger 10 montiert ist und mittels einer beweglichen Vorrichtung 11 in einen Autoklav 6 eingebracht ist. Zwischen der Anordnung 1 und der Umhüllung 5 befindet sich vorzugsweise eine (Diffusions-)Schicht 13 zur besseren Ausbreitung eines Unterdrucks (z.B. ein Vlies, ein Gitter oder eine gasdurchlässige Schicht beliebiger Art). Die zur Vulkanisation erforderliche Wärme kann durch eine innere Heizvorrichtung 6A oder durch eine externe Heißluftanlage erzeugt werden. Über eine Unterdruckleitung 7 und einen Unterdruckanschluss 8 wird mittels einer einen Unterdruck erzeugenden Einrichtung oder einer Vakuumpumpe 9 ein auf die Formteile 2 und 3 und die Vulkanisationsschicht 4 innerhalb der Umhüllung 5 wirkender Unterdruck erzeugt. Danach wird über eine Überdruckzufuhr 12 innerhalb des Autoklav 6 mittels eines beliebigen Mediums ein Vulkanisationsdruck aufgebaut. Gleichzeitig erfolgt eine Erwärmung des Innenraums des Autoklav.

Anhand Fig. 1 bis 3 sollen zunächst die wesentlichen Verfahrensschritte zur Herstellung eines Bauteils oder Schichtaufbaus aus zwei oder mehr miteinander durch Vulkanisieren zu verbindenden Einzelschichten (starre Formteile) erläutert werden.

Im ersten Verfahrensschritt (vgl. z.B. Fig. 2) werden die Formteile, die eine dem zu fertigenden Bauteil entsprechende Form und Größe aufweisen, übereinander gelegt, wobei zwischen die einzelnen Formteile 2 und 3 eine Vulkanisationsschicht 4 aus einem Kautschukmaterial gelegt wird, um eine Anordnung zu bilden. Die Formteile 2, 3 sind an ihrer Kontaktoberfläche mit einem geeigneten Haftvermittlungssystem 25 beschichtet. Die Wahl (Eignung) des Haftvermittlungssystems, üblicherweise bestehend aus einem Primer und einem Haftvermittler, ergibt sich aus den zu verbindenden Werkstoffen und der gewählten Kautschukmischung. Diese Haftvermittlungssysteme sind handelsüblich und entsprechen den bei der Vulkanisierung gemäß dem Stand der Technik eingesetzten Systemen. Eine spezielle Optimierung oder eine sorgfältige Anpassung an das neue Fertigungsverfahren ist nicht erforderlich.

Vor dem eigentlichen Fertigungsverfahren werden, wie allgemein bekannt und üblich, die zu verbindenden Formteile 2 und 3 entsprechend vorbehandelt. Die Vorbehandlung der Formteile 2 und 3 umfasst insbesondere das Reinigen der Oberflächen beispielsweise mittels Sandstrahlen oder Lösungen (z.B. chemisches Anätzen) und das umgehende Aufbringen des Primers und Haftvermittlers 25 zur Gewährleistung einer guten Verbindung der Formteile mit dem Kautschukmaterial. Da diese vorbereitenden Verfahrensschritte dem Fachmann bekannt sind, wird im Rahmen dieser Beschreibung auf eine nähere Erläuterung der Prozesse und der verwendeten Materialien verzichtet.

Die Auswahl der Materialien der zu verbindenden Formteile des Bauteils bzw. Schichtaufbaus ist grundsätzlich nicht eingeschränkt. Das Verfahren eignet sich somit für Formteile aus beliebigen Materialien, d.h. insbesondere auch für alle Metalle, Legierungen, insbesondere alle Stahlqualitäten und Legierungen aus Leichtmetallen, Kunststoffe, Faserverbundwerkstoffe (z.B. CFK und GFK), Keramiken, Kunstharzpressholz (z.B. Lignostone®), Gemische und Verbindungen dieser Materialien, inhomogene Komponenten (z.B. aufgeschäumte Metalle oder aufgeschäumte Kunststoffe) sowie aus natürlich gewachsenen Rohstoffen hergestellte Materialien. Der ausvulkanisierte Kautschuk muss den Anforderungen des fertigen Bauteils vor allem hinsichtlich der mechanischen Festigkeit und der physikalischen und chemischen Eigenschaften genügen. Derartige Eigenschaften werden dem Kautschukmaterial üblicherweise durch Zugabe von geeigneten Zuschlagstoffen verliehen, die dem Fachmann bekannt sind.

Nach diesen vorbereitenden Schritten wird die Kautschuk-Vulkanisationsschicht 4 möglichst umgehend zwischen die Oberflächen der Formteile 2 und 3 gelegt, um zu verhindern, dass die mit dem Haftvermittlungssystem 25 beschichteten Oberflächen verschmutzt werden. Diese Anordnung aus Formteilen und Vulkanisationsschichten kann dann vor der weiteren Verarbeitung über einen längeren Zeitraum (z.B. bis zu vier Wochen) zwischengelagert werden.

Danach wird die so gebildete Anordnung von einer flexiblen Umhüllung 5, zum Beispiel in Form einer Vakuum-Folie umschlossen, wie dies schematisch z.B. in Fig. 2 dargestellt ist. Das Innere der Umhüllung 5 ist über eine Fluidleitung 7 mit einer Unterdruckquelle 9 wie beispielsweise einer Vakuumpumpe verbunden. Die Höhe des Unterdrucks ist bei dem hier beschriebenen Verfahren abhängig von den eingesetzten Werkstoffen und der gewünschten Qualität der Verbindung. Sie kann daher von einem leichten Unterdruck bis zu einem so genannten technischen Vakuum reichen.

Im folgenden Verfahrensschritt wird die Unterdruckquelle 9 eingeschaltet, und der von der Umhüllung 5 umschlossene Raum wird evakuiert, sodass sich im Innern ein ausreichender Unterdruck einstellt. Hierdurch werden die Formteile 2, 3 und die Vulkanisationsschicht 4 des Bauteils bzw. Schichtaufbaus leicht zusammengepresst und dadurch stabilisiert.

Der Grad der Evakuierung richtet sich dabei nach den Gesichtspunkten der gewünschten Qualität der Verbindung. Das Evakuieren dient auch dazu, Lufteinschlüsse weitestgehend zu vermeiden. Ein Unterdruck in der Größenordnung von etwa 60 bis 80 hPa (= 60 bis 80 mbar) ist dabei in der Regel als ausreichend zu betrachten. Ein technisches Vakuum, also ein Druck von weniger als 10 hPa ist nur bei besonderen technischen Anforderungen oder bei bestimmten Verfahrenstechniken notwendig. Die bei der Druckbeaufschlagung und während der Vulkanisation entstehenden Gase bzw. Dämpfe werden über die Unterdruckleitung 7 abgeführt. Alternativ könnten sie in einem im Inneren eines Autoklaven positionierten, ausreichend druckfesten Gefäß aufgenommen werden.

Die obigen Verfahrensschritte können ohne spezielle Apparaturen und ohne großen Aufwand durchgeführt werden. Außerdem werden die meisten Schritte außerhalb des Autoklaven durchgeführt, sodass der Autoklav zeitlich nur wenig beansprucht und die Fertigung der Bauteile damit kostengünstiger wird.

Als nächstes wird die Anordnung zum Vulkanisieren des Kautschukmaterials der Vulkanisationsschicht 4 in einen beheizbaren Druckbehälter 6 (Autoklav) eingebracht. Wie bereits ausgeführt, stehen derartige Autoklaven im Grunde in beliebiger Größe zur Verfügung, sodass mit dem hier offenbarten Verfahren auch sehr große Bauteile hergestellt werden können. Wie in Fig. 7 und 8 angedeutet, können insbesondere auch mehrere Anordnungen gleichzeitig in dem Autoklaven vulkanisiert werden, was die Effizienz dieses Verfahrens weiter erhöht und die Herstellungskosten noch weiter senkt.

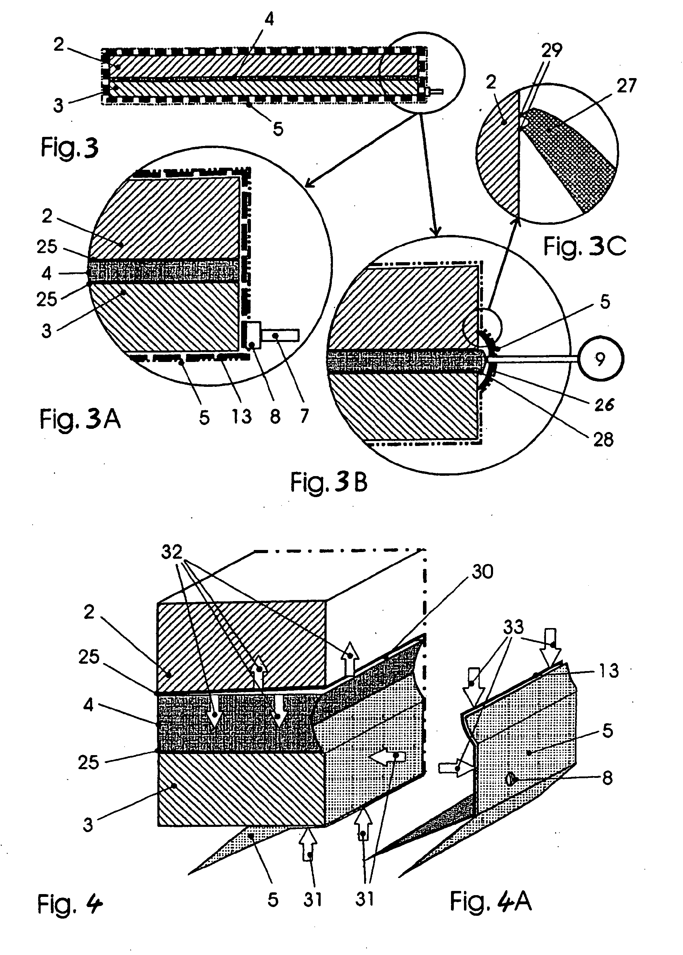

Nachdem der entsprechende Unterdruck im Raum innerhalb der Umhüllung 5 aufgebaut ist, werden, wie bereits erwähnt, die Anordnungen zunächst mit einem Druck im Bereich von etwa 0,3 MPa (= 3 bar) bis 2,0 MPa (= 20 bar), bevorzugt im Bereich von etwa 0,5 MPa (= 5 bar) bis etwa 1,5 MPa (= 15 bar) beaufschlagt. Dadurch werden die Formteile 2, 3 und die Vulkanisationsschichten 4 der Anordnungen weiter zusammengedrückt (vgl. Fig. 4). Der Autoklav 6 ist zur Druckerzeugung mit einer Überdruckquelle 12 verbunden. Im Gegensatz zu den herkömmlich verwendeten Pressen und Presswerkzeugen wird dabei in dem Autoklaven 6 der Überdruck gleichmäßig auf alle Flächen der Anordnungen aufgebracht. Eine Reihe von Beispielen belegt, dass sich die Bandbreite zu vulkanisierender Bauteile damit gegenüber herkömmlichen Verfahren ganz entscheidend erweitert.

Anschließend werden die Anordnungen zusätzlich zum Druckaufbau mittels einer internen oder externen Heizvorrichtung 6A (vgl. Fig. 1) erwärmt. Die Erwärmung erfolgt vorteilhafterweise erst, nachdem in dem Autoklaven der eigentliche Vulkanisationsdruck aufgebaut worden ist, da dann eine gleichmäßigere Vulkanisierung des Kautschukmaterials der Vulkanisationsschicht 4 erzielt werden kann. Die Temperatur wird, wie bereits erwähnt, je nach eingesetztem Kautschukmaterial auf 140°C bis 200°C, bevorzugt auf 150°C bis 160°C hochgefahren. Da diese Temperatur nicht unmittelbar über eine heiße Pressplatte aufgebracht wird, wie dies bei einer Presse für ein eingangs beschriebenes herkömmliches Verfahren der Fall ist, erfolgt die Erwärmung der Kautschuk-Zwischenlagen 4 gleichmäßiger und homogener, sodass auch die Vulkanisierung bei dem hier vorgeschlagenen Verfahren gleichmäßiger erfolgt. Neben der Höhe der Temperatur ist deren Verteilung während der Vulkanisation zu beachten.

Während der Beaufschlagung der Anordnung mit Druck und Temperatur bleibt der Unterdruck in der umgebenden flexiblen Umhüllung vorteilhafterweise aufrechterhalten. Auf diese Weise werden alle Gaseinschlüsse zwischen den Lagen der Anordnungen und auch die beim Vulkanisationsvorgang entstehenden Gase oder Dämpfe abgesaugt und Gasblasen in der Vulkanisationsschicht wirksam verhindert.

Wie bereits erwähnt, hängt die Zeitdauer der Druck- und Temperaturbeaufschlagung im Wesentlichen von den Materialeigenschaften des gewählten Kautschukmaterials und der eingestellten Temperatur im Autoklaven ab. Weiterhin bestimmen Schichtdicke und Werkstoffeigenschaften sowie der Wärmeübergang der Einzelschichten die Zeitdauer (Verweildauer) im Autoklaven. Die innere Oberfläche der jeweiligen Materialschicht zum Kautschuk muss die für die Vulkanisation notwendige Temperatur jeweils kurzzeitig erreichen. So kann die Verweildauer im Autoklaven je nach Schichtdicke und Material unter einer Stunde liegen oder auch bis zu mehreren Stunden betragen.

Anhand Fig. 2 bis 4 werden grundsätzliche Erläuterungen zu einem Aufbau entsprechend der Erfindung gegeben.

So zeigt Fig. 2 ein Beispiel für einen zweischichtigen Aufbau einer Anordnung (Bauteil oder Schichtaufbau) 1 mit einer oberen Platte 2, einer unteren Platte 3 und einer dazwischen liegenden Vulkanisationsschicht 4. Die gesamte Anordnung ist von einer Umhüllung (Vakuum-Folie) 5 umgeben.

Fig. 2A zeigt eine Teilvergrößerung von Fig. 2 mit den Bauteilkomponenten 2 und 3, der Vulkanisationsschicht 4 und einem Haftvermittlungssystem 25. Die zwischen der Kautschukfolie und den Bauteilkomponenten immer vorzusehenden Haftvermittlungsschichten 25 sind bei den folgenden Figuren nur noch in besonderen Fällen eingezeichnet.

Fig. 2B zeigt eine Teilvergrößerung von Fig. 2 mit einer Abdeckleiste 26 für eine z.B. dickere Vulkanisationsschicht 4, bei der die Gefahr besteht, dass während der Vulkanisation die weiche Gummimasse seitlich austreten könnte. Bei diesem Beispiel liegt eine gerade Abdeckleiste 26 an den Seitenflächen der Bauteilkomponenten 2 und 3 auch an, um den Aufbau eines Spaltdrucks bei der Druckbeaufschlagung unter Verzicht auf eine Absaugung zu verhindern.

Fig.3 zeigt ein Beispiel für einen Aufbau entsprechend Fig. 2 mit den Bauteilkomponenten 2 und 3, einer dazwischen liegenden Vulkanisationsschicht 4 und einer vollständigen Umhüllung 5.

Fig. 3A zeigt eine Teilvergrößerung von Fig. 3. Dargestellt sind die Bauteilkomponenten 2 und 3, die Vulkanisationsschicht 4, die Haftvermittlungsschichten 25, eine Umhüllung 5, ein ebenfalls umhüllendes Vlies oder eine gasdurchlässige Schicht beliebiger Art als Diffusionsschicht 13 unter der Umhüllung 5, und eine Unterdruckleitung 7 an einem Unterdruckanschluss 8.

Fig. 3B zeigt eine Teilvergrößerung entsprechend Fig. 3A, mit einer Folie als gasdichter Umhüllung 5, hier ohne Diffusionsschicht, einer einen Unterdruck oder ein Vakuum erzeugenden Einrichtung 9 und einem weiteren Abdeckbeispiel für die Vulkanisationsschicht 4. Diese besteht aus einer hohlen Abdeckleiste 26 oder einem zur Vulkanisationsschicht hin hohlen Rundteil grundsätzlich beliebiger Gestaltung. Ein derartiges Teil kann auch zur Aufnahme des unter Vulkanisationsdruck auftretenden Vulkanisationsschicht-Wulstes 28 dienen.

Fig. 3C zeigt eine Teilvergrößerung von Fig. 3B mit einer selbstdichtenden, d.h. mit Dichtlippen 29 versehenen Abdeckleiste 26 für die Vulkanisationsschicht.

Fig.4 liefert Erläuterungen zur Druckverteilung bei einem Umschließen der Anordnung 1 des herzustellenden Bauteils mittels einer Umhüllung 5 und einer gitterartigen, gasdurchlässigen Schicht oder einem Vlies als Diffusionsschicht 13 entsprechend der Erfindung. Die Umhüllung 5 bewirkt, dass der im Autoklav 6 aufgebaute Druck nur von außen auf das Bauteil einwirken kann und nicht in einen eventuellen Spalt 30 zwischen den Komponenten 2 oder 3 des Bauteils und der Vulkanisationsschicht 4 eindringen kann. Die Pfeile 32 symbolisieren den wirksamen Spaltdruck innerhalb des Autoklaven 6 bei nicht vorhandener Umhüllung 5, die Pfeile 31 stehen für den Foliendruck auf der Bauteiloberfläche bei Verwendung einer Umhüllung 5. Die Haftung der Vulkanisationsschicht 4 an den Bauteilkomponenten 2 und 3 wird wie stets durch einen Haftvermittler und/oder Primer 25 gewährleistet, die Absaugung oder Erzeugung eines Unterdrucks erfolgt über einen Unterdruckanschluss 8.

Fig. 4A zeigt ein Detail von Fig. 4 mit der Umhüllung 5, der Diffusionsschicht 13 und dem Unterdruckanschluss 8. Die Pfeile 33 symbolisieren den in der Diffusionsschicht 13 aufgebauten Unterdruck.

Ein weiterer Vorteil der Erfindung besteht darin, dass in Bezug auf die Art der Folienumkleidung und über die technischen Möglichkeiten weiterer Vulkanisations-Abdichteinrichtungen ein nahezu beliebig großer Spielraum existiert.

Ein weiterer, technisch bedeutsamer Vorteil der Erfindung besteht darin, dass an die Gleichmäßigkeit keine höheren Anforderungen gestellt werden müssen, da kleinere Abweichungen der Vulkanisationsschicht den Ablauf und die Qualität des Vulkanisationsverfahrens nicht oder nur unwesentlich beeinflussen. Dies gilt sowohl in Bezug auf Unebenheiten der Innenflächen und auf eine ungleichmäßige Dickenverteilung (natürlich nur soweit die geforderten Eigenschaften der Vulkanisationsschicht nicht beeinträchtigt werden).

Bisher wurden der Einfachheit halber vorzugsweise Bauteile bzw. Schichtaufbauten 1 mit zwei zusammenzuvulkanisierenden Komponenten gezeigt. Gleiche Überlegungen gelten natürlich für Bauteile mit beliebiger Komponentenanzahl. Als ein einfaches Beispiel sei eine Variante eines dreischichtigen Bauteils mit zwischen den Bauteilkomponenten angeordneten Vulkanisationsschichten 4 genannt.

Fig. 5 zeigt zwei Beispiele für einen Folien- bzw. Kantenschutz bei der Vulkanisation eines scharfkantigen Bauteils 1. Bei der linken Teilvergrößerung (Fig. 5A) ist die Vakuumfolie 5 mit einem Vlies 13 zum Druckausgleich unterlegt, wobei eine auf das Bauteil bzw. die Bauteilkante aufliegende Eckleiste 69 die Folie 5 und das Vlies 13 vor der Kante 70 des Bauteils 1 schützt. Selbstverständlich kann es sich dabei auch um einen Kantenschutz anderer Form handeln oder, im einfachsten Falle, um eine Verstärkung der Komponente 13 unter der Folie 5 in diesem Bereich. Bei der rechten Teilvergrößerung (Fig. 5B) ist eine hohle Eckleiste bzw. Kantenschutzleiste 69 unter der Folie 5 angebracht. Über diese kann zum Beispiel auch ein Druckausgleich stattfinden (vgl. Fig. 3B).

Fig. 6 zeigt zwei Beispiele für ein Bauteil 1 aus zwei Platten 2 und 3 mit dazwischen liegender Vulkanisationsschicht 4 und einer hier auf der Oberseite aufvulkanisierten, abdeckenden Vulkanisationsschicht mit grundsätzlich beliebiger Oberflächenstruktur. Beim linken Beispiel handelt es sich um einen Schichtaufbau mit aufvulkanisierter Oberflächenschicht 77 mit linienartiger oder streifenförmiger Gestaltung 74, im rechten Beispiel um eine Vulkanisations-Oberfläche 77 mit einer Struktur aus Noppen 75. Selbstverständlich ist auch hier eine Vielzahl weiterer Gestaltungsmöglichkeiten dieser Oberflächenart 76 denkbar. Sie kann selbst eine Reihe von Funktionen erfüllen, wie z.B. einen Oberflächenschutz ganz allgemein darstellen, einen rutschfesten Belag bilden, einen Belag mit Drainagekanälen darstellen, ein gleichzeitig farbig gestalteter Belag sein oder besondere weitere Eigenschaften aufweisen wie etwa isolierend oder elektrisch leitend sein. Es ist auch denkbar, dass in einen derartigen Oberflächenbelag eine Heizung (beispielsweise zum Entfrosten oder zum Verhindern einer Eisbildung) integriert ist.

Eine Oberflächengestaltung, wie sie in Fig. 6 dargestellt ist, kann entweder direkt durch Vulkanisation gebildet werden oder dadurch erreicht werden, dass vorgeformte Gummiteile aufvulkanisiert werden.

Ein weiteres, die Erfindung erheblich erweiterndes Anwendungsfeld ergibt sich dadurch, dass bereits vorgeformte elastomere Körper auf Träger aufvulkanisiert werden, und als weitere Variante, dass zwischen derartigen Konfigurationen noch zusätzliche vorgefertigte Strukturen mittels Vulkanisation eingebracht werden.

In einer weiteren Ausgestaltung der bisher vorgetragenen Möglichkeiten zur Anwendung des hier zu Grunde liegenden Vulkanisationsverfahrens können auf die bereits beschriebene, sehr einfache Weise auch beliebig geformte oder gestaltete Oberflächenstrukturen aus nichtmetallischen oder metallischen Komponenten mit Trägerplatten oder Trägerstrukturen zusammengefügt werden. Hierzu wird zwischen das gestaltete Bauteil und die Unterdruckfolie ein Negativ zwischengeschaltet, sodass die Folie ein ausreichend einfaches Profil umspannt.

Das Vulkanisationsverfahren entsprechend der Erfindung eignet sich auch in besonderer Weise für die Herstellung sehr komplexer vulkanisierter Innenstrukturen bzw. Innenstrukturen mit technischen Funktionen wie etwa Schwingungs- oder Schockdämpfung. Weiterhin können gleichzeitig Hohlräume realisiert werden.

Ein besonderer Vorteil der Erfindung besteht darin, dass mit sehr einfachen Mitteln beliebig geformte (kompliziert gestaltete) Strukturen zusammenzufügen sind, und dies bei gleichzeitiger Verbesserung des technischen Standards des Gesamtbauteils. Das bezieht sich insbesondere auf dünne und noch mehr auf sehr dünnwandige Strukturen. Hieraus ergibt sich ein nahezu beliebiges Feld von Anwendungsmöglichkeiten im allgemeinen Maschinenbau, im Bauwesen, im Apparatebau und insbesondere im Leichtbau. So können Verbindungen geschaffen werden, die unabhängig von den Eigenschaften der einzelnen Komponenten sind, und dies bei gleichzeitiger Verbesserung der technischen Eigenschaften der Struktur besonders im Hinblick auf Stoßdämpfung, Oberflächengestaltung oder Schwingungsverhalten.

Die obigen Beispiele für Vulkanisationsverfahren entsprechend der Erfindung bezogen sich überwiegend auf flächenhafte Bauteile oder Schichtaufbauten. Dies stellt jedoch keinesfalls das einzige Anwendungsfeld dar. Vielmehr ergeben sich gerade aus den geschilderten Vorteilen des hier vorgestellten Vulkanisationsverfahrens nahezu unbegrenzte Einsatzmöglichkeiten. Insbesondere ist die Erfindung auch auf rotationssymmetrische Bauteile übertragbar. Das im Zusammenhang mit der Erfindung beschriebene Verfahren zur Vulkanisation derartiger Bauteile bietet entscheidende Fortschritte. So sind nicht nur runde Teile zu umkleiden, sondern Teile mit beliebig gestalteten Oberflächen, und dies auf technisch denkbar einfache Weise.

Beim Auskleiden von Behältern, Rohren oder sonstigen Hohlräumen ist bei herkömmlichen Verfahren der Vulkanisationsdruck gering. Er besteht in der Regel nur aus einem Kontaktdruck, der an der Oberfläche ausgeübt wird. Deshalb muss der Vulkanisationsprozess zum Teil durch den Einsatz von Weichmachern bzw. Lösungsmitteln unterstützt werden. Im Gegensatz dazu kann mit Verfahren entsprechend der Erfindung ein sehr hoher Innendruck erzeugt werden, sodass den Möglichkeiten des Auskleidens mittels Vulkanisieren von Bauteilen keine technischen Grenzen gesetzt sind. Gleichzeitig ist man auch bei der Gestaltung der inneren Oberfläche völlig frei.

Es ist offensichtlich, dass die oben dargelegten Beispiele für die Vulkanisation von Bauteilen oder technischen Elementen mittels einer während der Vulkanisation weitgehend formstabilen Kautschukfolie eine Vielzahl weiterer Einsatzmöglichkeiten eröffnet. Dabei ist auch von Vorteil, dass über die Art und Härte des eingesetzten natürlichen oder synthetischen Gummis oder sonstiger, für diesen Anwendungsbereich geeigneten Stoffe die technischen Eigenschaften derartiger Verbindungen eingestellt bzw. gesteuert werden können.

Ein besonders breiter Anwendungsbereich für das Vulkanisationsverfahren entsprechend der Erfindung ergibt sich beim Zusammenfügen segmentierter symmetrischer Bauteile wie z.B. geschlitzte Zylinder als Grundform eines Treibspiegels (Sabots) in der Ballistik.

Im Fall einer weitgehend formstabilen Vulkanisationsschicht kann die Vulkanisationsschicht auch selbst mit einer Oberflächenstruktur versehen werden. Der Gedanke einer strukturierten Vulkanisationsschicht kann nun auf die Unterdruck-Folie übertragen und dahingehend weiterentwickelt werden, dass die Oberflächenstruktur der Unterdruck-Folie gleichzeitig noch weiteren Forderungen gerecht wird, um z.B. die Unterlegung eines Vlies unnötig zu machen.

Der Schwerpunkt der bisherigen Ausführungen lag auf der Vulkanisation von Bauteilen bzw. Schichtaufbauten und der Bildung von Oberflächen aus Vulkanisationsschichten. Der dieser Erfindung zugrunde liegende Aufbau ist im Fall einer weitgehend formstabilen Vulkanisationsschicht jedoch in gleicher Weise auch dazu geeignet, auf der Innenseite von hohlen Bauteilen oder zwischen zwei Schichten mit Abstand vulkanisierte Flächen aufzubauen. Es ist dabei lediglich die durch den Vulkanisationsdruck erzeugte Aufweitungskraft entweder durch das Bauteil selbst, oder mittels einer geeigneten Einspannvorrichtung aufzufangen.

Alternativ kann die benötigte äußere Kraft auch durch den gleichzeitigen Aufbau eines äußeren Überdrucks in einen umgebenden Druckbehälter aufgebracht werden.

Da zwischen die Bauteilkomponenten eingebrachte Gummielemente (abgesehen von allfälligen Hohlräumen) inkompressibel sind, kann - bei Formstabilität der Einzelkomponenten des Aufbaus - eine Vulkanisation grundsätzlich sowohl an den Kontaktflächen der Gummikörper selbst, als auch an den Platten 2 und 3 mittels der Vulkanisationsschicht 4 stattfinden.

Die nahezu beliebige gestalterische Freiheit bei den unterschiedlichen Vulkanisationsmöglichkeiten entsprechend der Erfindung ermöglicht auch, dass in einem Autoklav gleichzeitig mehrere Formteile oder Schichtaufbauten neben- oder übereinander positioniert werden können. So zeigt das Beispiel in Fig. 7 die Beschickung eines Autoklaven 6 mit hier drei Stapeln 292 unterschiedlichen zu vulkanisierenden Gutes mit gemeinsamer oder getrennter Unterdruckfolie (mit Absaugung). Jeder Stapel 292 kann dabei auf einer eigenen Palette 287 positioniert sein.

Es kann auch technisch sinnvoll sein bzw. einer günstigeren Produktion dienen, wenn die Absaugung des zu vulkanisierenden Gutes optimiert wird. So ist in Fig. 8 ein Autoklav 6 mit Beispielen für eine gemeinsame oder getrennte Absaugung der zur Vulkanisation in den Autoklav verbrachten Teile dargestellt. Die Absaugung erfolgt z.B. über lose oder befestigte Leitungen, Absaugstutzen, Injektionsnadeln. Auf der linken Ladebühne befinden sich Baugruppen oder Einzelkörper 295 bzw. 297, die mittels getrennten Absaugungen 296 bzw. 298 evakuiert werden. Auf der rechten Ladebühne befindet sich ein Stapel zur evakuierender Bauteile oder Schichtaufbauten 299, die mittels einer gemeinsamen (verbundenen oder verknüpften) Absaugeinrichtung 300 evakuiert werden.

### BEZUGSZEICHENLISTE

- 1: Anordnung (Bauteil / Schichtaufbau)
- 2: Formteil (obere Bauteilkomponente)
- 3: Formteil (untere Bauteilkomponente)
- 4: Vulkanisationsschicht
- 5: Umhüllung
- 6: Autoklav / Druckbehälter
- 6A: Heizvorrichtung
- 7: Unterdruckleitung
- 8: Unterdruckanschluss
- 9: Unterdruckquelle
- 10: Träger
- 11: bewegliche Vorrichtung
- 12: Überdruckquelle
- 13: Diffusionsschicht (gasdurchlässige Schicht / Vlies / Gitter / Struktur)
- 25: Haftvermittlungssystem
- 26: Abdeckleiste
- 28: Vulkanisationsschicht-Wulst
- 29: Dichtlippen von 26
- 30: Spalt
- 31: Pfeil für Foliendruck auf Bauteil-Oberfläche
- 32: Pfeil für Spaltdruck (hier identisch mit Autoklav-Innendruck)
- 33: Pfeil für Unterdruck im Vlies
- 69: Eckleiste
- 70: Kante / Grat
- 74: linienartige Vulkanisationsstruktur der Oberfläche von 77
- 75: Noppe, Formelement von 77
- 76: Oberfläche von 77
- 77: Vulkanisations-Oberfläche
- 287: Ladebühnen
- 292: Stapel von Bauteilen / Schichtaufbauten
- 295: Einzelkörper
- 296: Absaugung von 295
- 297: Baugruppe
- 298: Absaugung von 297
- 299: Stapel aus Vulkanisationselementen mit gemeinsamer Absaugung
- 300: Absaug-Verbindungselement von 299

## Patentansprüche

1. Verfahren zur Herstellung eines großflächigen Bauteils aus zwei oder mehr durch Vulkanisationsschichten (4) verbundenen starren Formteilen (2, 3), mit den Schritten:
- Bereitstellen eines Schichtaufbaus (2-4) aus wenigstens zwei starren Formteilen (2, 3) und wenigstens einer Vulkanisationsschicht (4) dazwischen in einer dem herzustellenden Bauteil entsprechenden Anordnung (1);
- Umschließen der Anordnung (1) aus Formteilen und Vulkanisationsschicht(en) mit einer flexiblen oder dehnbaren, fluiddichten Umhüllung (5);
- Erzeugen eines Unterdrucks in der Umhüllung (5); und
- Beaufschlagen der umschlossenen Anordnung (1) mit Druck und Temperatur in einem beheizbaren Druckbehälter (6) zum Vulkanisieren der Vulkanisationsschicht(en), wobei die Temperatur im Bereich zwischen 140°C und 200°C liegt.

2. Verfahren nach Anspruch 1, **dadurch gekennzeichnet, dass** auch während des Vulkanisationsschrittes in der Umhüllung (5) ein Unterdruck aufrechterhalten wird.

3. Verfahren nach Anspruch 1 oder 2, **dadurch gekennzeichnet, dass** in dem Vulkanisationsschritt zunächst der Druck und anschließend die Temperatur zum Vulkanisieren der Vulkanisationsschichten (4) aufgebaut werden.

4. Verfahren nach einem der Ansprüche 1 bis 3, **dadurch gekennzeichnet, dass** der Vulkanisationsschritt in dem beheizbaren Druckbehälter (6) durchgeführt wird, während die vorbereitenden Verfahrensschritte außerhalb des beheizbaren Druckbehälters durchgeführt werden.

5. Verfahren nach einem der Ansprüche 1 bis 4, **dadurch gekennzeichnet, dass** innerhalb der Umhüllung (5) der Anordnung ein Unterdruck unter 80 hPa erzeugt wird.

6. Verfahren nach einem der Ansprüche 1 bis 5, **dadurch gekennzeichnet, dass** zur Vulkanisation der Vulkanisationsschichten des Bauteils ein Druck im Bereich von 0,1 MPa bis 2 MPa gewählt wird.

7. Verfahren nach einem der Ansprüche 1 bis 6, **dadurch gekennzeichnet, dass** die Temperatur zur Vulkanisation der Vulkanisationsschicht(en) (4) im Bereich zwischen 150°C und 160°C liegt.

8. Verfahren nach einem der vorherigen Ansprüche, **dadurch gekennzeichnet, dass** die Vulkanisationsschichten eine ein- oder mehrteilige Dämpfungsschicht darstellen.

9. Verfahren nach einem der vorherigen Ansprüche, **dadurch gekennzeichnet, dass** die Vulkanisationsschichten von einer selbstdichtenden oder mittels einer umgebenden Folie abgedichteten Dichtleiste (26) abgedeckt werden.

10. Verfahren nach Anspruch 9, **dadurch gekennzeichnet, dass** die Dichtleiste selbst ein Ausgleichsvolumen darstellt oder abgesaugt werden kann bzw. der dort entstehende Überdruck abgeleitet werden kann.

11. Verfahren nach einem der vorherigen Ansprüche, **dadurch gekennzeichnet, dass** die Umhüllung (5) an ihrer Innenseite mit einer Diffusionsschicht (13) zur Aufnahme oder Ableitung der Gaseinschlüsse versehen ist.

12. Verfahren nach Anspruch 11, **dadurch gekennzeichnet, dass** die Diffusionsschicht (13) ein Faservlies, ein Gewebe, eine Gewebelage oder ein Geflecht ist oder einen anderweitig ausgelegten, flüssigkeits- und/oder gasdurchlässigen Aufbau aufweist.

13. Verfahren nach einem der vorherigen Ansprüche, **dadurch gekenntzeichnet, dass** eine weitere Vulkanisationsschicht (77) auf wenigstens einer Außenseite des Schichtaufbaus (2-4) angeordnet wird und die gesamte Anordnung aus Schichtaufbau (2-4) und weiterer Vulkanisationsschicht (77) von der Umhüllung (5) umschlossen wird, um die Vulkanisationsschicht(en) (4) des Schichtaufbaus (2-4) und die weitere Vulkanisationsschicht (77) gleichzeitig zu vulkanisieren.

14. Verfahren nach Anspruch 13, **dadurch gekennzeichnet, dass** die weitere Vulkanisationsschicht (77) eine Oberflächenstruktur (74, 75) besitzt oder während des Vulkanisationsvorgangs gleichzeitig mit einer Oberflächenstruktur (74, 75) versehen wird.

## Claims

1. A method for the manufacture of a large-area component from two or more rigid shaped parts (2, 3) joined by vulcanisation layers (4), comprising the steps:
- preparing a layer construction (2-4) from at least two rigid shaped parts (2, 3) and between them at least one vulcanisation layer (4) in an arrangement (1) corresponding to the component to be produced;
- enclosing the arrangement (1) of shaped parts and vulcanisation layer(s) with a flexible or stretchable, fluid-tight casing (5);
- generating an underpressure in the casing (5); and
- subjecting the enclosed arrangement (1) to pressure and temperature in a heatable pressure vessel (6) to vulcanise the vulcanisation layer(s), the temperature being in the range between 140°C and 200°C.

2. A method according to claim 1, **characterised in that** an underpressure is maintained in the casing (5) also during the vulcanisation step.

3. A method according to claim 1 or 2, **characterised in that**, in the vulcanisation step, first the pressure and then the temperature are built up for vulcanisation of the vulcanisation layers (4).

4. A method according to any one of claims 1 to 3, **characterised in that** the vulcanisation step in the heatable pressure vessel (6) is carried out whilst the preparatory method steps are being carried out outside the heatable pressure vessel.

5. A method according to any one of claims 1 to 4, **characterised in that** an underpressure below 80 hPa is generated inside the casing (5) of the arrangement.

6. A method according to any one of claims 1 to 5, **characterised in that** a pressure in the range from 0.1 MPa to 2 MPa is selected for vulcanisation of the vulcanisation layers of the component.

7. A method according to any one of claims 1 to 6, **characterised in that** the temperature for vulcanisation of the vulcanisation layer(s) (4) is in the range between 150°C and 160°C.

8. A method according to any one of the preceding claims, **characterised in that** the vulcanisation layers comprise a one-part or multi-part damping layer.

9. A method according to any one of the preceding claims, **characterised in that** the vulcanisation layers are covered by a self-sealing sealing strip (26) or by means of a sealing strip (26) sealed by means of a surrounding film.

10. A method according to claim 9, **characterised in that** the sealing strip itself represents a compensating volume or a suction can be applied thereto and the overpressure occurring there can be dissipated.

11. A method according to any one of the preceding claims, **characterised in that** the casing (5) is provided on its inside with a diffusion layer (13) for receiving or discharging the entrapped gases.

12. A method according to claim 11, **characterised in that** the diffusion layer (13) is a fibre fleece, a woven material, a fabric layer or a meshwork material or comprises a fluid-permeable and/or gas-permeable construction of other design.

13. A method according any one of the preceding claims, **characterised in that** a further vulcanisation layer (77) is arranged on at least one outer side of the layer construction (2-4) and the entire arrangement comprising layer construction (2-4) and further vulcanisation layer (77) is enclosed by the casing (5) in order to vulcanise the vulcanisation layer(s) (4) of the layer construction (2-3) and the further vulcanisation layer (77) simultaneously.

14. A method according to claim 13, **characterised in that** the further vulcanisation layer (77) has a surface structure (74, 75) or during the vulcanisation process is simultaneously provided with a surface structure (74, 75).

## Revendications

1. Procédé pour la réalisation d'un élément de grande surface composé de deux ou plusieurs éléments rigides de forme définie (2, 3) reliés ensemble par des couches vulcanisées (4), comprenant les étapes suivantes :
- mise en place d'un ensemble multicouches (2-4) dont l'agencement (1) est adapté à l'élément fini, à partir d'au moins deux éléments rigides de forme définie (2, 3) et d'au moins une couche vulcanisée (4) intercalée ;
- recouvrement de l'ensemble agencé (1) composé des éléments de forme définie et de la (des) couche(s) vulcanisée(s) avec une enveloppe (5) flexible ou extensible et étanche aux fluides ;
- mise en sous-pression de l'enveloppe (5) ;
- traitement de l'ensemble agencé (1) dans un autoclave chauffant (6) à une certaine pression et une température se situant entre 140°C et 200°C afin de vulcaniser la (les) couche(s).

2. Procédé selon la revendication 1, **caractérisé en ce qu'**une sous-pression est maintenue dans l'enveloppe (5) pendant l'étape de vulcanisation.

3. Procédé selon la revendication 1 ou 2, **caractérisé en ce que** lors de l'étape de vulcanisation, on établit d'abord la pression et on augmente ensuite la température pour vulcaniser les couches (4).

4. Procédé selon les revendications 1 à 3, **caractérisé en ce que** l'étape de vulcanisation est réalisée dans un autoclave chauffant (6) tandis que les étapes préparatoires du procédé sont réalisées en dehors de l'autoclave chauffant.

5. Procédé selon une des revendications 1 à 4, **caractérisé en ce que** l'on crée une sous-pression de 80 hPa dans l'enveloppe (5) de l'ensemble agencé.

6. Procédé selon une des revendications 1 à 5, **caractérisé en ce que** l'on choisit une pression dans la plage de 0,1 MPa à 2 MPa pour la vulcanisation des couches de la pièce.

7. Procédé selon une des revendications 1 à 6, **caractérisé en ce que** la température pour la vulcanisation de la (des) couche(s) (4) se situe dans la plage de 150°C à 160°C.

8. Procédé suivant l'une des revendications précédentes, **caractérisé en ce que** les couches vulcanisées constituent une mono- ou une multi-couche amortissante.

9. Procédé suivant l'une des revendications précédentes, **caractérisé en ce que** les couches vulcanisées sont recouvertes d'une barrette d'étanchéité (26) dont l'étanchéité est intrinsèque ou qui ont été rendues étanches par un film les entourant.

10. Procédé selon la revendication 9, **caractérisé en ce que** la barrette d'étanchéité constitue elle-même un volume de compensation ou qu'elle peut être aspirée ou bien qu'elle permet d'évacuer la surpression générée à son niveau.

11. Procédé selon une des revendications précédentes, **caractérisé en ce que** l'enveloppe (5) comprend sur sa paroi intérieure une couche de diffusion (13) pour absorber ou pour évacuer les inclusions de gaz.

12. Procédé suivant la revendication 11, **caractérisé en ce que** la couche de diffusion (13) est un voile de fibres, un tissu, un toilage ou un tressage ou possède une autre structure définie perméable aux fluides et/ou aux gaz.

13. Procédé selon une des revendications précédentes, **caractérisé en ce qu'**une autre couche vulcanisée (77) est disposée sur au moins une surface de l'ensemble des couches (2-4) et que l'ensemble complet constitué des couches (2-4) et de la couche vulcanisée supplémentaire (77) est entouré de l'enveloppe (5) afin de vulcaniser simultanément la (les) couche(s) de vulcanisation (4) de l'ensemble agencé (2-4) et la couche vulcanisée (77).

14. Procédé selon la revendication 13, **caractérisé en ce que** la couche vulcanisée supplémentaire (77) possède une structure superficielle (74, 75) ou que cette structure superficielle (74, 75) lui est appliquée pendant la vulcanisation.
